# EUROPÄISCHE PATENTSCHRIFT

(11) **EP 3 298 617 B1**
(45) Veröffentlichungstag und Bekanntmachung des Hinweises auf die Patenterteilung: **19.06.2019**
(21) Anmeldenummer: 16726296.3
(22) Anmeldetag: 20.05.2016
(51) Int. Cl.: H01G 11/26, H01G 11/28, H01G 11/36, H01G 11/56, H01G 11/58, H01G 11/86

(54) **SUPERKONDENSATOREN MIT AUSGERICHTETEN KOHLENSTOFFNANORÖHREN UND VERFAHREN ZU DEREN HERSTELLUNG**
SUPERCAPACITORS WITH ALIGNED CARBON NANOTUBE AND METHOD FOR THE PRODUCTION THEREOF
SUPERCONDENSATEURS COMPRENNANT DES NANOTUBES DE CARBONE ALIGNÉS ET LEUR MÉTHODE D'OBTENTION

(30) Priorität: 20.05.2015 DE 102015107982
(43) Veröffentlichungstag der Anmeldung: 28.03.2018
(73) Patentinhaber: Deutsches Zentrum für Luft- und Raumfahrt e.V., 51147 Köln (DE)
(72) Erfinder: MAHRHOLZ, Thorsten, 38228 Salzgitter (DE); GEIER, Sebastian, 38114 Braunschweig (DE)
(74) Vertreter: REHBERG HÜPPE + PARTNER
(86) Internationale Anmeldenummer: PCT/EP2016/061372
(87) Internationale Veröffentlichungsnummer: WO 2016/185002

(56) Entgegenhaltungen:
- WO-A2-2013/066474
- US-A1- 2007 076 349
- US-A1- 2011 183 206
- US-A1- 2015 010 788

## Beschreibung

### TECHNISCHES GEBIET DER ERFINDUNG

Die Erfindung betrifft ein Verfahren zur Herstellung einer elektrochemischen Speichervorrichtung mit einer elektrischen Kapazität zum Speichern und Bereitstellen von elektrischer Energie.

Zu derartigen Speichervorrichtungen zählen insbesondere so genannte Superkondensatoren. Dabei sind von dem Begriff "Superkondensator" sowohl Doppelschichtkondensatoren, deren Kapazität hauptsachlich von einer Doppelschichtkapazität bestimmt wird, als auch Pseudokondensatoren, deren Kapazität hauptsächlich von einer Pseudokapazität bestimmt wird, sowie Hybridkondensatoren, zu deren Kapazität sowohl eine Doppelschichtkapazität als auch eine Pseudokapazität zu nennenswerten Anteilen beiträgt, umfasst.

### STAND DER TECHNIK

WO 2013/100753 A1 offenbart einen Superkondensator, der eine kammförmig ausgestaltete Elektrodenbasis und eine kammförmig ausgestaltete Gegenelektrodenbasis aufweist, die ineinander greifen. Senkrecht zur Richtung des Ineinandergreifens der Elektrodenbasis und der Gegenelektrodenbasis sind sowohl auf deren Oberseiten als auch auf deren Unterseiten Kohlenstoffnanoröhren (CNT, engl. "carbon nanotubes") angeordnet. Der Superkondensator wird hergestellt, indem ein Material der Elektrodenbasis und der Gegenelektrodenbasis auf ein Substrat aufgetragen wird. Mittels nasschemischen Ätzens oder Plasmaätzens wird dann das Material so weit abgetragen, dass die ineinandergreifenden Kammformen der Elektrodenbasis und der Gegenelektrodenbasis ausgeformt werden, wobei auch das Substrat jeweils bis auf einen Anschlussbereich der Elektrodenbasis und der Gegenelektrodenbasis entfernt wird. Auf der Elektrodenbasis und der Gegenelektrodenbasis werden dann jeweils auf der Ober- und der Unterseite die Kohlenstoffnanoröhren aufgewachsen. Schließlich wird eine Einkapselung des Superkondensators an seiner Unterseite begonnen, ein Elektrolyt zwischen Elektrode und Gegenelektrode eingebracht und die Einkapselung des Superkondensators abgeschlossen.

Aus EP 11 46 527 A2 ist ein Superkondensator bekannt, der eine Elektrode und eine Gegenelektrode aufweist. Die Elektrode und die Gegenelektrode sind als parallel zueinander angeordnete Platten ausgebildet, zwischen denen ein Elektrolyt vorgesehen ist. Über einen zwischen der Elektrode und der Gegenelektrode angeordneten Separator wird eine Trennung der Elektrode und der Gegenelektrode sichergestellt. Die Elektrode und die Gegenelektrode weisen auf ihren einander zugewandten Oberflächen jeweils eine Matrix aus Kohlenstoffnanoröhren auf. Dadurch soll eine Vergrößerung der zu der Doppelschichtkapazität beitragenden Oberfläche und damit eine Vergrößerung der Doppelschichtkapazität erreicht werden.

DE 10 2013 104 396 A1 offenbart eine elektrochemische Speichervorrichtung mit einer Elektrode und einer Gegenelektrode mit in Richtung ihres Abstands ineinander eingreifenden Oberflächenstrukturelementen. Die Oberflächenstrukturelemente sind dabei gleichmäßig und aufeinander abgestimmt angeordnet. Zwischen der Elektrode und der Gegenelektrode mit den ineinander eingreifenden Oberflächenstrukturelementen ist ein Elektrolyt vorgesehen. Die Oberflächenstrukturelemente werden durch Form-Präge- oder Pressverfahren oder durch strukturiertes Abtragen aus einem Substrat, aus dem die Elektrode und/oder die Gegenelektrode ausgebildet sind, oder mit einem von einem solchen Substrat separaten Bestandteil hergestellt. Die Oberflächenstrukturelemente werden insbesondere aus Kohlenstoffnanoröhren oder lamellenartig angeordneten Graphenschichten ausgebildet.

US 2011/0073827 A1 offenbart eine elektrochemische Speichervorrichtung, bei der eine Elektrode und eine Gegenelektrode innerhalb einer Nanopore eines Substrats ausgebildet werden. Dabei werden innerhalb der Nanopore verschiedenen Schichten ausgebildet, wobei eine erste Schicht entlang einer Wandung der Nanopore die Elektrode ausbildet, eine darauf aufgetragene zweite Schicht einen Elektrolyten ausbildet und eine darauf aufgetragene dritte Schicht die Gegenelektrode ausbildet.

Elektrochemische Speichervorrichtungen oder Superkondensatoren, bei denen eine Elektrode und eine Gegenelektrode gegenüberliegend angeordnet sind und sich zwischen der Elektrode und der Gegenelektrode miteinander verzahnte Oberflächenstrukturelemente der Elektrode und der Gegenelektrode erstrecken, sind beispielsweise bekannt aus US 2012/0282530 A1 und DE 100 53 276 C1, wobei beispielsweise in US 2009/0021890 A1 und WO 2012/128763 A1 solche verzahnten Oberflächenstrukturelemente aus Kohlenstoffnanoröhren ausgebildet sind.

US 2015/0010788 A1 offenbart ein Herstellungsverfahren für eine Lithium-Ionen-Zelle mit einer negativen Elektrode und einer positiven Elektrode, zwischen denen ein Elektrolyt angeordnet ist. Beide Elektroden weisen Kohlenstoff-Nanoröhren auf, die auf einem Stromkollektor aus einem leitfähigen Material, wie Metall oder Kohlenstoff, aufgewachsen sind. Elektrode und Gegenelektrode sind auf einem Substrat angeordnet, das aus einem nicht-leitfähigen Material, wie einem Polymer oder einer Keramik, besteht. Das Substrat kann zylindrisch, gefaltet, gebogen oder aufgewickelt sein. Die Kohlenstoff-Nanoröhren sind gemeinsam oder einzeln mit Graphen ummantelt. Zur Herstellung wird auf das Substrat der Stromkollektor als leitfähige Schicht aufgebracht und auf diesem die Kohlenstoff-Nanoröhren aufgewachsen. Dabei können Muster für die Kohlenstoff-Nanoröhren vorgegeben werden.

US 2007/0076349 A1 offenbart einen Superkondensator, aber kein Herstellungsverfahren für diesen. Der Superkondensator weist eine erste Elektrode und eine zweite Elektrode auf. Zwischen den beiden Elektroden ist in einem Gehäuse ein Elektrolyt eingeschlossen. Beide Elektroden weisen Kohlenstoff-Nanofasern oder Kohlenstoff-Nanoröhren auf. Die beiden Elektroden haben einen Abstand zwischen 0,1 µm und 1000 µm. Die beiden Elektroden sind auf einer Schicht aus Titan angeordnet, die selbst auf einer Schicht aus Molybdän und einem darunterliegenden Substrat angeordnet ist. Für das Substrat ist als bevorzugtes Material Siliziumnitrit offenbart.

WO 2013/066474 A1 offenbart einen Superkondensator mit einer Oberflächenstruktur aus Graphen-Nanoblätter oder Graphit-Blättern. Der Superkondensator kann flexibel und papierähnlich sein, so dass er etwa um einen Stab gebunden werden kann. Die Kohlenstoff-Nanoröhren und die Graphit-Blätter werden auf eine positive und eine negative Elektrode aufgewachsen, wobei nicht offenbart ist, welche Orientierung sie in Bezug auf die Elektroden einnehmen.

Eine Elektrode mit einer Oberflächenstruktur aus Kohlenstoffnanoröhren wird auch in US 2011/0183206 A1 offenbart.

### AUFGABE DER ERFINDUNG

Der Erfindung wie in Anspruch 1 offenbart, liegt die Aufgabe zugrunde, ein Verfahren zur Herstellung einer elektrochemischen Speichervorrichtung mit einer elektrischen Kapazität zum Speichern und Bereitstellen von elektrischer Energie aufzuzeigen, mit dem mindestens ein Vorteil aus der eine höhere Energiedichte der gespeicherten Energie, eine höhere elektrische Kapazität und eine höhere Leistungsdichte umfassenden Gruppe sowie eine kompakte Bauweise erreicht wird.

### LÖSUNG

Die Aufgabe der Erfindung wird erfindungsgemäß durch ein Verfahren zur Herstellung einer Speichervorrichtung mit den Merkmalen des unabhängigen Patentanspruchs 1 gelöst. Bevorzugte erfindungsgemäße Ausgestaltungen des Verfahrens sind den abhängigen Patentansprüchen zu entnehmen.

### BESCHREIBUNG DER ERFINDUNG

Die Erfindung betrifft ein Verfahren zur Herstellung einer elektrochemischen Speichervorrichtung zum Speichern und Bereitstellen von elektrischer Energie mittels ihrer elektrischen Kapazität, insbesondere eines sogenannten Superkondensators.

Nach dem erfindungsgemäßen Verfahren wird insbesondere eine elektrochemische Speichervorrichtung hergestellt, wie sie im Folgenden beschrieben wird:
Die Speichervorrichtung weist eine Elektrode und eine Gegenelektrode auf, zwischen denen ein Elektrolyt so angeordnet ist, dass er die Elektrode von der Gegenelektrode trennt. Die Elektrode weist eine Elektrodenbasis, die Gegenelektrode eine Gegenelektrodenbasis auf. Die Elektrodenbasis ist beispielsweise blattförmig, das heißt, sie erstreckt sich hauptsächlich in einer Elektrodenebene, während sie normal zu der Elektrodenebene nur eine vergleichsweise geringe Erstreckung aufweist. Die Elektrodenbasis kann auch eine anderweitige Form aufweisen, bei der die Elektrodenebene ihre Haupterstreckungsebene ist. Ebenso kann die Gegenelektrodenbasis blattförmig sein und erstreckt sich jedenfalls hauptsächlich in einer Gegenelektrodenebene.

Auf ihrer Oberfläche weist sowohl die Elektrode als auch die Gegenelektrode eine oberflächenvergrößernde Struktur auf. Dabei kann die oberflächenvergrößernde Struktur der Elektrode in anderer Weise ausgebildet sein als die oberflächenvergrößernde Struktur der Gegenelektrode, bevorzugt sind aber die oberflächenvergrößernden Strukturen der Elektrode und der Gegenelektrode in gleicher Weise ausgebildet. Die oberflächenvergrößernde Struktur weicht von einer ebenen Oberfläche ab. Beispielsweise kann die Oberfläche Ausnehmungen, gerade oder geschwungene Riefen, diskrete oder ineinander übergehende Erhebungen, Vorsprünge in Form von zylindrischen Säulen oder solchen mit einem quadratischen oder hexagonalen Querschnitt, Pyramiden, Halbkugeln oder Halbellipsoiden oder andere strukturschaffende Modifikationen wie etwa spiralartige oder schraubenartige (helikoide) Strukturen aufweisen. Dabei können auch verschiedene strukturschaffende Modifikationen kombiniert sein. Die oberflächenvergrößernde Struktur bewirkt in vorteilhafter Weise, dass die Oberflächen der Elektrode und der Gegenelektrode vergrößert werden und damit die Kapazität der Speichervorrichtung erhöht wird. Dies kann wie folgt verdeutlicht werden: Für einen Plattenkondensator folgt die Kapazität C der Formel *C*=*ε₀ εᵣA*/*d* (mit der elektrischen Feldkonstante des Vakuums *ε₀,* der relativen Permittivität *εᵣ* des Elektrolyten, dem Abstand d von Elektrode und Gegenelektrode und der Oberfläche A der Elektrode bzw. der Gegenelektrode). Bei gegebenem Elektrolyten sind *ε₀* und *εᵣ* Konstanten. Daher kann die Kapazität nur erhöht werden, indem der Abstand möglichst klein und die Oberfläche möglichst groß gewählt wird. Das Aufbringen der oberflächenvergrößernden Strukturen erhöht also die Kapazität der Speichervorrichtung.

In der Speichervorrichtung fallen die Elektrodenebene und die Gegenelektrodenebene in einer Anschlussebene zusammen. Damit wird eine elektrische Kontaktierung der Speichervorrichtung wesentlich erleichtert. Es genügt, wenn die Kontaktierung in der Anschlussebene erfolgt. Bei vielen herkömmlichen Speichervorrichtungen muss die Elektrode in einer Anschlussebene und die Gegenelektrode in einer weiteren Anschlussebene kontaktiert werden. Hierzu sind jeweils Kollektoren notwendig, deren Vorhandensein ebenso wie die in einer Dickenrichtung (d. h. senkrecht zu der Elektrodenebene und der Gegenelektrodenebene) auftretende "Stapelung" von Elektrode und Gegenelektrode dazu führt, dass die Speichervorrichtung eine kompaktere, flachere Bauweise aufweist als viele herkömmliche Speichervorrichtungen.

Die Elektrodenbasis und die Gegenelektrodenbasis können auf einem gemeinsamen Substrat angeordnet sein. Die Elektrodenbasis und die Gegenelektrodenbasis umfassen dabei jeweils Teile einer leitfähigen Anschlussschicht, die die Anschlussebene definiert. Für die Anschlussschicht sind alle leitfähigen Materialien geeignet. Bevorzugt sind solche Materialien, die sich in einfacher Weise auf das Substrat aufbringen lassen oder mit denen das Substrat in einfacher Weise beschichtet werden kann. Besonders bevorzugt sind hierbei Metalle, Graphit oder leitfähige Polymere wie Polypyrrol, Polyanilin, Pentacen oder Polythiopen. Die Elektrodenbasis und die Gegenelektrodenbasis sind bevorzugt aus demselben Material ausgebildet, es ist aber möglich, dass die Elektrodenbasis und die Gegenelektrodenbasis ganz oder teilweise aus verschiedenen Materialien ausgebildet sind.

Ein Aufbringen der Anschlussschicht auf das Substrat kann beispielsweise über chemische (CVD, engl. chemical vapour deposition) oder physikalische Gasphasenabscheidung (PVD, engl. physical vapour deposition), Atomlagenabscheidung (ALD, engl. atomic layer deposition), Galvanotechnik oder Tauchbeschichtung (engl. dip coating) erfolgen.

Das Substrat kann beliebige geeignete Materialien umfassen, die geeignet sind, ein Material der Elektrode und ein Material der Gegenelektrode zu tragen, insbesondere solche, die geeignet sind, mit einem solchen Material beschichtet zu werden. Um einen Kurzschluss zwischen der Elektrode und der Gegenelektrode zu vermeiden, darf das Substrat selbst nicht elektrisch leitfähig sein. Bevorzugt ist das Substrat ein Isolator. Als Isolator werden Keramiken und Polymere bevorzugt. Das Substrat kann auch aus verschiedenen Materialien zusammengesetzt sein, sowohl indem Materialien in geeigneter Weise gemischt oder legiert werden, als auch indem Materialien geschichtet werden, um das Substrat auszubilden. Das Substrat kann ein Vollmaterial, aber auch ein poröses Material oder ein Schaum wie beispielsweise ein Gradientenwerkstoff oder ein Aerogel sein.

Wenn das Substrat flüssigkeitsdicht ist, ist keine zusätzliche Abdichtung der Speichervorrichtung notwendig, wenn als Elektrolyt ein Flüssigelektrolyt Einsatz finden soll. Dieser wird bereits durch das flüssigkeitsdichte Substrat am Auslaufen aus der Speichervorrichtung nach unten gehindert.

Aufgrund ihrer kompakten, flachen Bauweise eignet sich die erfindungsgemäße Speichervorrichtung besonders gut dazu, als gestapelte Speichervorrichtung ausgebildet zu werden, wobei mehrere Lagen der Speichervorrichtung der beschriebenen Art übereinander gestapelt werden. Da das Substrat nicht elektrisch leitend ist, können die mehreren Lagen einander ohne weiteres berühren, ohne dass unerwünschte elektrische Kontakte hergestellt werden.

Ein Stapeln kann auch dadurch erreicht werden, dass die Speichervorrichtung zylindrisch oder in anderer Weise aufgerollt wird. Effektiv bilden sich dadurch aufeinander angeordnete Lagen der Speichervorrichtung, die einem Stapeln gleichkommen. Bei einer gegebenen Länge des sich ergebenden Zylinders bedeutet diese kompakte, flache Bauweise zusammen mit der Separationswirkung des nicht elektrisch leitenden Substrats, dass eine zylindrische Speichereinrichtung mit geringerem Durchmesser bei gleicher Kapazität oder eine zylindrische Speichereinrichtung herkömmlichen Durchmessers aber größerer Kapazitäten erzeugt werden kann.

Auch die Ausbildung der oberflächenvergrößernden Strukturen der Elektrode und der Gegenelektrode wird durch die gemeinsame Anschlussebene erleichtert, da die Elektrode und die Gegenelektrode bzw. die Elektrodenbasis und die Gegenelektrodenbasis gleichzeitig zugänglich sind.

Die einander gegenüberliegenden Flächen von Elektrode und Gegenelektrode können zusätzlich dadurch vergrößert werden, dass die Elektrodenbasis und die Gegenelektrodenbasis in der Anschlussebene ineinander eingreifen. Bevorzugt greifen die Elektrodenbasis und die Gegenelektrodenbasis dabei kamm- oder fingerförmig ineinander ein. Möglich ist aber auch, dass die Elektrodenbasis und die Gegenelektrodenbasis mäanderförmig oder spiralförmig ineinander eingreifen. Auch eine anderweitige Ausbildung von ineinandergreifenden Armen, Bändern oder Zähnen der Elektrodenbasis und der Gegenelektrodenbasis ist möglich, beispielsweise können die Elektrodenbasis und die Gegenelektrodenbasis dreieckige oder unregelmäßig geformte ineinandergreifende Zähne aufweisen.

Die oberflächenvergrößernde Struktur kann Oberflächenstrukturelemente umfassen. Oberflächenstrukturelemente liegen dann vor, wenn die oberflächenvergrößernde Struktur separat hervortretende und als einzelne Elemente erkennbare diskrete Strukturen ausbildet. Beispielsweise können Oberflächenstrukturelemente vorhanden sein, indem die Oberfläche eine "hügelige" Struktur mit einzelnen Erhebungen zeigt. Oberflächenstrukturelemente können mit jeder beliebigen Form in den Elektrolyten vortreten. Beispielsweise können die Oberflächenstrukturelemente zylindrische, würfel- oder quaderförmige, spatförmige, prismatische (auch hexagonal prismatische), blattförmige, lamellenartige, pyramidenförmige, kegelförmige, halbkugelförmige, halbellipsoidale, spiralartige, schraubenartige (helikoide) oder andere regelmäßig oder unregelmäßig geformte Oberflächenstrukturelemente sein, wobei Kombinationen verschiedener Oberflächenstrukturelemente möglich sind. Besonders bevorzugt sind die Oberflächenstrukturelemente langgestreckt zylindrisch oder blattförmig, insbesondere lamellenartig.

Jedes der Oberflächenstrukturelemente kann eine Hauptachse aufweisen. Sind die Oberflächenstrukturelemente beispielsweise langgestreckt zylindrisch, so ist die Hauptachse die Längsachse des Zylinders. Sind die Oberflächenstrukturelemente blattförmig oder lamellenartig, ist die Hauptachse eine der beiden Haupterstreckungsrichtungen der Oberflächenstrukturelemente. In einer bevorzugten Ausführungsform verlaufen die Hauptachsen der Oberflächenstrukturelemente parallel zueinander. "Parallel" bedeutet hier, dass sich die Oberflächenstrukturelemente, wenn sie sich in der Anschlussebene nicht berühren, auch in ihrem weiteren Verlauf nicht berühren. Sind die Oberflächenstrukturelemente also beispielsweise langgestreckt zylindrisch, so weisen die Oberflächenstrukturelemente im Wesentlichen in dieselbe Richtung, wobei die Winkel ihrer Hauptachsen gegenüber einer gemeinsamen Referenzebene nicht so weit voneinander abweichen, dass sich die Oberflächenstrukturelemente berühren. Wenn die Oberflächenstrukturelemente blattförmig oder lamellenartig sind, dann sind sie nach Art von Lamellen angeordnet. Das heißt, die Haupterstreckungsebenen benachbarter Oberflächenstrukturelemente sind durch gleiche Verschiebungen in Deckung zu bringen. Auch in diesem Fall berühren sich die Oberflächenstrukturelemente nicht, wenn sie sich in der Anschlussebene nicht berühren.

Weiterhin sind die Hauptachsen der Oberflächenstrukturelemente bevorzugt quer zu der Anschlussebene ausgerichtet. "Quer" bedeutet hier, dass die Hauptachsen der Oberflächenstrukturelemente gegenüber der Anschlussebene einen Winkel zwischen 80° und 100°, bevorzugt zwischen 85° und 95°, besonders bevorzugt zwischen 88° und 92°, einnehmen. Besonders bevorzugt sind die Hauptachsen der Anschlusselemente senkrecht zu der Anschlussebene ausgerichtet.

Die Oberflächenstrukturelemente können im Wesentlichen aus Kohlenstoff bestehen. Hierbei kann es sich um jede bekannte Erscheinungsform des Kohlenstoffs handeln, wobei der Kohlenstoff sowohl in reiner Form, beispielsweise als Graphit, Diamant oder Fulleren, vorliegen kann als auch in chemisch gebundener Form, beispielsweise als Kohle. Es können auch Mischungen vorliegen, bei denen entweder verschiedene Erscheinungsformen des Kohlenstoffs oder Kohlenstoff mit anderen Materialien vermischt sind. Für die Oberflächenstrukturelemente kann aber auch ein geeignetes anderes elektronenleitendes Material eingesetzt werden, das in dem Elektrolyten eine ausreichende elektrochemische Stabilität aufweist.

Die Oberflächenstrukturelemente können Kohlenstoffnanoröhren umfassen. Die Kohlenstoffnanoröhren können dabei als fertig ausgebildete Kohlenstoffnanoröhren auf die Anschlussschicht aufgesetzt sein oder auf dieser aufgewachsen sein.

Die Oberflächenstrukturelemente können Graphenschichten umfassen. Die Graphenschichten sind bevorzugt lamellenartig angeordnet und berühren einander dabei nicht, sodass eine starke Vergrößerung der Oberfläche der Elektrode und der Gegenelektrode erreicht wird.

Der Elektrolyt kann einen Festkörperelektrolyten umfassen. Ein Festkörperelektrolyt kann beispielsweise Nafion sein, das auf die Elektrode, die Gegenelektrode und in den Zwischenraum aufgebracht wurde, indem Teflon aufgedampft und mit Sulfonsäuregruppen funktionalisiert wurde. Für den Festkörperelektrolyten kommen beispielsweise auch Lithium-Mischoxide, Lithium-Mischsulfide oder weitere ionenleitfähige Polymere, die auch mit Protonensäuren modifiziert sein können, in Frage.

Der Elektrolyt kann einen Flüssigelektrolyten umfassen. Als Flüssigelektrolyt können etwa ionische Flüssigkeiten und deren Mischungen mit Protonensäuren (Brönstedt-Säuren) eingesetzt werden. Für wässrige Elektrolyte mit dem Lösungsmittel Wasser kommen dabei Protonensäuren wie Schwefelsäure, Alkalien wie Kaliumhydroxid oder Salze wie quartäre Phosphoniumsalze, Natriumperchlorat (NaClO₄), Lithiumperchlorat (LiClO₄) oder Lithiumhexafluoridoarsenat (LiAsF₆) in Frage. Des Weiteren können Elektrolyte mit organischen Lösungsmitteln wie Acetonitril, Propylencarbonat, Tetrahydrofuran, Diethylcarbonat, γ-Butyrolacton und mit quaternären Ammoniumsalzen oder Alkylammoniumsalzen wie z. B. Tetraethylammoniumtetrafluoroborat (N(Et)₄BF₄) oder Triethyl(metyl)ammoniumtetrafluoroborat (NMe(Et)₃BF₄) eingesetzt werden.

Der Elektrolyt kann die Oberflächenstrukturelemente teilweise oder vollständig überziehen. Dabei kann der Elektrolyt eine beliebige Dicke auf den Oberflächenstrukturelemente erzielen, bis er alle Freiräume zwischen den Oberflächenstrukturelemente ausfüllt. Der Elektrolyt überzieht auch die Elektrodenbasis und die Gegenelektrodenbasis, wenn diese freiliegende Oberflächen haben. Dabei muss der Elektrolyt in einer zusammenhängenden Elektrolytschicht sowohl die Elektrode als auch die Gegenelektrode mindestens kontaktieren. Zur Erreichung einer möglichst großen Oberfläche, die zur Kapazität der Speichervorrichtung beitragen kann, überzieht der Elektrolyt die Elektrode und die Gegenelektrode zu einem möglichst großen Anteil, bevorzugt vollständig. Zwischenräume zwischen den Oberflächenstrukturelementen können frei bleiben, d. h. sie müssen nicht von dem Elektrolyten ausgefüllt sein. Wenn der Elektrolyt eine einheitliche Dicke aufweist, erhält die Speichervorrichtung so eine Oberfläche, die im Wesentlichen der Oberfläche der Elektrode und der Gegenelektrode mit den Oberflächenstrukturelementen folgt.

Der Elektrolyt kann den Zwischenraum zwischen den Oberflächenstrukturelementen (der gegebenenfalls auch durch die Elektrodenbasis und die Gegenelektrodenbasis sowie das Substrat begrenzt ist) ausfüllen. Wenn die Elektrode und die Gegenelektrode von dem Elektrolyten vollständig bedeckt sind, kann die Speichervorrichtung eine ebene Oberfläche aufweisen.

Die Elektrode und/oder die Gegenelektrode kann an ihrer dem Elektrolyten zugekehrten Oberfläche nach Art einer Kompositelektrode ein Übergangsmetalloxid aufweisen. Das Übergangsmetalloxid kann die Elektrode und/oder die Gegenelektrode vollständig oder nur teilweise bedecken. Bevorzugt weist das Übergangsmetalloxid eine geringe Schichtdicke auf. Bevorzugt wird als Übergangsmetalloxid Iridiumoxid (IrO₂), Eisenoxid (Fe₃O₄) oder Manganoxid (MnO₂), besonders bevorzugt Ruthenium(IV)-oxid (auch Rutheniumdioxid, RuO₂) gewählt. Anstelle eines Übergangsmetalloxids kann auch jede andere Beschichtung der Oberfläche der Elektrode und/oder der Gegenelektrode gewählt werden, die es erlaubt, eine Pseudokapazität der Speichervorrichtung zu nutzen oder zu vergrößern. Beispielsweise kann eine Schwefelverbindung wie ein Titansulfid (TiS₂), eine Mischung mit einem Übergangsmetall und einer Schwefelverbindung wie die von Ruthenium(IV)-oxid mit Schwefelsäure (H₂SO₄), ein Nitrid beispielsweise von Molybdän, Titan oder Eisen oder Lithiumionen gewählt werden.

Eine Breite der Elektrode und der Gegenelektrode und ein Abstand der Elektrode von der Gegenelektrode liegen vorzugsweise zwischen 2 nm und 50 nm. Gemäß der obigen Formel *C*=*ε₀ εᵣ A*/*d* ist die Kapazität C in vorteilhafter Weise dann besonders groß, wenn der Abstand *d* der Elektrode und der Gegenelektrode besonders klein ist. Ein Abstand der Elektrode und der Gegenelektrode wird im Bereich weniger Nanometer gewählt. Ein solcher Abstand entspricht dem Größenbereich von Kohlenstoffnanoröhren. Wird die Breite der Elektrode und der Gegenelektrode in diesem Größenbereich gewählt, so kann ein besonders vorteilhaftes Ineinandergreifen der Elektrode und der Gegenelektrode erreicht werden, wodurch ihre wirksamen Oberflächen maximiert werden. Wird die Breite der Elektrode und/oder der Gegenelektrode so gewählt, dass gerade Platz für eine Reihe von Kohlenstoffnanoröhren ist (d. h. im Bereich des Durchmessers einer Kohlenstoffnanoröhre), so kann jede einzelne Kohlenstoffnanoröhre voll zur Kapazität der Speichervorrichtung beitragen.

In dem erfindungsgemäßen Verfahren werden in einer gemeinsamen Anschlussebene eine Elektrodenbasis für eine Elektrode und eine Gegenelektrodenbasis für eine Gegenelektrode erzeugt, auf denen jeweils eine oberflächenvergrößernde Struktur erzeugt wird. Zwischen der so gebildeten Elektrode und der so gebildeten Gegenelektrode wird ein Elektrolyt angeordnet.

Die oberflächenvergrößernde Struktur der Elektrode und der Gegenelektrode wird erzeugt, bevor die Elektrodenbasis oder die Gegenelektrodenbasis erzeugt werden.

Eine leitfähige Anschlussschicht, beispielsweise eine leitfähige Anschlussschicht, wie sie vorhergehend im Zusammenhang mit der erfindungsgemäßen Speichervorrichtung beschrieben wurde, wird zur Herstellung der Speichervorrichtung auf ein nicht elektrisch leitfähiges Substrat aufgebracht, das dem vorhergehend im Zusammenhang mit der erfindungsgemäßen Speichervorrichtung beschriebenen Substrat entsprechen kann. Anschließend wird die leitfähige Anschlussschicht bereichsweise entfernt. Aus einem Flächenbereich, der bei dem bereichsweisen Abtragen der Anschlussschicht zurückbleibt, wird die Elektrodenbasis, aus einem anderen Flächenbereich, der bei dem bereichsweisen Abtragen der Anschlussschicht zurückbleibt, wird die Gegenelektrodenbasis gebildet. Bei dem Abtragen der Anschlussschicht wird dabei der Flächenbereich, aus dem die Elektrodenbasis gebildet wird, von dem Flächenbereich getrennt, aus dem die Gegenelektrodenbasis gebildet wird, sodass zwischen der Elektrodenbasis und der Gegenelektrodenbasis und damit der Elektrode und der Gegenelektrode keine elektrisch leitende Verbindung durch die Anschlussschicht bestehen bleibt. Die einzige elektrisch relevante Verbindung zwischen der Elektrode und der Gegenelektrode wird durch das Auftragen des Elektrolyten hergestellt.

Beispielsweise können auf der Anschlussschicht, in die gegebenenfalls Katalysatorpartikel eingebettet wurden, zunächst Kohlenstoffnanoröhren aufwachsen. Nach dem Aufwachsen der Kohlenstoffnanoröhren werden die Elektrodenbasis und die Gegenelektrodenbasis erzeugt, indem die Anschlussschicht aufgetrennt wird. Hierbei werden auch die Kohlenstoffnanoröhren entfernt, die in dem Bereich aufgewachsen waren, in dem die Anschlussschicht entfernt wird, oder die sich oberhalb dieses Bereichs erstrecken. Dies ist besonders vorteilhaft, als dass Kohlenstoffnanoröhren, die drohen, einen Kurzschluss zwischen der Elektrode und der Gegenelektrode hervorzurufen, weil sie nicht parallel zu den anderen aufgewachsen sind, beim Auftrennen der Anschlussschicht entfernt werden. Zum Erzeugen der Elektrodenbasis und der Gegenelektrodenbasis und zum Erzeugen der oberflächenvergrößernden Struktur der Elektrode und der Gegenelektrode können alle vorhergehend genannten Verfahren zum Einsatz kommen. Dabei wird jeweils der Teil der oberflächenvergrößernden Struktur oder der Teil der Oberflächenstrukturelemente, der sich in dem Bereich der Anschlussschicht befindet, der bei dem Erzeugen der Elektrodenbasis und der Gegenelektrodenbasis entfernt wird, ebenfalls entfernt.

Wenn die Anschlussschicht bereichsweise entfernt wird, wird die oberflächenvergrößernde Struktur in einen mit dem einen und einen mit dem anderen verbleibenden Flächenbereich der Anschlussschicht verbundenen Teil aufgetrennt. Dies bedeutet, dass nach dem Auftrennen ein Teil der oberflächenvergrößernden Struktur mit der Elektrodenbasis verbunden ist und die Elektrode bildet, während der andere Teil der oberflächenvergrößernden Struktur mit der Gegenelektrodenbasis verbunden ist und die Gegenelektrode bildet.

In einer Ausführungsform der Erfindung wird die Anschlussschicht mit einem Laserstrahl, einem fokussierten lonenstrahl (FIB, engl. focussed ion beam) oder durch eine Plasmaätztechnik entfernt. Es kann aber jedes geeignete Verfahren eingesetzt werden, mit dem die Anschlussschicht gezielt abgetragen werden kann, ohne dass dabei das Substrat abgetragen oder zumindest wesentlich in seiner Dicke verringert wird.

In einer weiteren bevorzugten Ausführungsform der Erfindung werden Katalysatorpartikel, beispielsweise mit Eisen, Nickel, Kobalt oder Yttrium, für ein Aufwachsen von Kohlenstoffnanoröhren in die Anschlussschicht eingebettet. Dabei können die Katalysatorpartikel in die Anschlussschicht eingebettet werden, bevor diese auf das Substrat aufgetragen wird oder bevor diese jedenfalls in ihre Form als Anschlussschicht gebracht wird. Die Katalysatorpartikel können aber auch in die Anschlussschicht eingebettet werden, nachdem sie auf das Substrat aufgetragen wurde oder in ihre Form als Anschlussschicht gebracht wurde. Die Katalysatorpartikel können auch dann noch in die Anschlussschicht eingebettet werden, wenn diese bereits in Elektrodenbasis und Gegenelektrodenbasis aufgetrennt wurde. Die Katalysatorpartikel ermöglichen oder vereinfachen das Aufwachsen von Kohlenstoffnanoröhren auf der Anschlussschicht.

In einer bevorzugten Ausführungsform der Erfindung wird die oberflächenvergrößernde Struktur der Elektrode und der Gegenelektrode erzeugt, indem Kohlenstoffnanoröhren auf der Elektrodenbasis und/oder der Gegenelektrodenbasis aufwachsen. Die Kohlenstoffnanoröhren wachsen dabei bevorzugt parallel zueinander auf. Es ist aber nicht notwendig, dass alle Kohlenstoffnanoröhren parallel aufwachsen, da Kohlenstoffnanoröhren, die zu den anderen Kohlenstoffnanoröhren nicht parallel sind, abgetragen werden können, bevor der Elektrolyt aufgetragen wird. Die oberflächenvergrößernde Struktur kann aber nicht nur durch Aufwachsen von Kohlenstoffnanoröhren erzeugt werden, sondern auch, indem andere Oberflächenstrukturelemente wie die vorhergehend im Zusammenhang mit der erfindungsgemäßen Speichervorrichtung beschriebenen erzeugt werden. Beispielsweise können Graphenschichten aufwachsen oder eine Struktur der Elektrode und der Gegenelektrodenbasis kann eingeprägt oder durch Abtragen oder Auftragen von Material erzeugt werden.

In einer bevorzugten Ausführungsform der Erfindung wachsen die Kohlenstoffnanoröhren unter Einfluss eines elektrischen Feldes auf. Das elektrische Feld beeinflusst dabei die Ausrichtung der aufwachsenden Kohlenstoffnanoröhren so, dass eine höhere Parallelität der Kohlenstoffnanoröhren erreicht wird.

In einer Ausführungsform der Erfindung wachsen die Kohlenstoffnanoröhren durch plasmaunterstützte chemische Gasphasenabscheidung (PECVD, engl. plasma-enhanced chemical vapour deposition; auch plasma-assisted chemical vapour deposition, PACVD) auf. Es können aber auch andere zum Aufwachsen von Kohlenstoffnanoröhren bekannte Verfahren gewählt werden.

In einer weiteren Ausführungsform der Erfindung wird der Elektrolyt durch chemische Gasphasenabscheidung (CVD) oder Atomlagenabscheidung (ALD) auf die Elektrode und die Gegenelektrode aufgetragen. Es können aber auch andere bekannte Verfahren gewählt werden, die sich dazu eignen, den Elektrolyten auf die Elektrode und die Gegenelektrode aufzutragen. Solche Verfahren können sich je nach Art des gewählten Elektrolyten unterscheiden. Beispielsweise ist es erfindungsgemäß bevorzugt, die Elektrode und die Gegenelektrode in einem CVD-Prozess über die Gasphase mit Teflon zu ummanteln und anschließend ebenfalls über die Gasphase mit Sulfonsäuregruppen zu funktionalisieren, sodass als Elektrolyt oder Teil des Elektrolyten Nafion gebildet wird. Beispielsweise kann der Elektrolyt aber auch über die flüssige Phase aufgebracht werden.

In einer weiteren Ausführungsform der Erfindung wird ein Übergangsmetalloxid auf die Elektrode und/oder die Gegenelektrode aufgetragen. Durch das Übergangsmetalloxid, bevorzugt RuO₂, wird eine Pseudokapazität der Speichervorrichtung erzeugt oder erhöht.

In einer Ausführungsform der Erfindung wird das Übergangsmetalloxid durch chemische (CVD) oder physikalische Gasphasenabscheidung (PVD) aufgetragen.

Die Speichervorrichtung kann, ohne weitergehend gekapselt werden zu müssen, zur Ausbildung eines kompakten Bauelements gestapelt werden, da das nicht elektrisch leitende Substrat die Lagen elektrisch voneinander trennt. Die Speichervorrichtung kann in gleicher Weise auch ohne weitere isolierende Umkapselung zylindrisch oder anderweitig aufgerollt werden.

Vorteilhafte Weiterbildungen der Erfindung ergeben sich aus den Patentansprüchen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Oberflächenstrukturelement die Rede ist, ist dies so zu verstehen, dass genau ein Oberflächenstrukturelement, zwei Oberflächenstrukturelemente oder mehr Oberflächenstrukturelemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Speichervorrichtung, die nach dem erfindungsgemäßen Verfahren hergestellt wurde.
- **Fig. 2**: zeigt eine Speichervorrichtung nach einem ersten Herstellungsschritt, nämlich nach dem Erzeugen einer Anschlussschicht.
- **Fig. 3**: zeigt eine Speichervorrichtung nach einem zweiten Herstellungsschritt, nämlich nach einem Aufwachsen von Kohlenstoff-Nanoröhren.
- **Fig. 4**: zeigt eine Speichervorrichtung nach einem dritten Herstellungsschritt, nämlich nach dem Erzeugen einer Elektrodenbasis und einer Gegenelektrodenbasis.
- **Fig. 5**: zeigt eine Speichervorrichtung nach einem letzten Herstellungsschritt, nämlich nach dem Anordnen eines Elektrolyten, und daher in einem betriebsbereiten Zustand.
- **Fig. 6**: zeigt ein Ablaufdiagramm eines Herstellungsverfahrens für eine erfindungsgemäße Speichervorrichtung.

### FIGURENBESCHREIBUNG

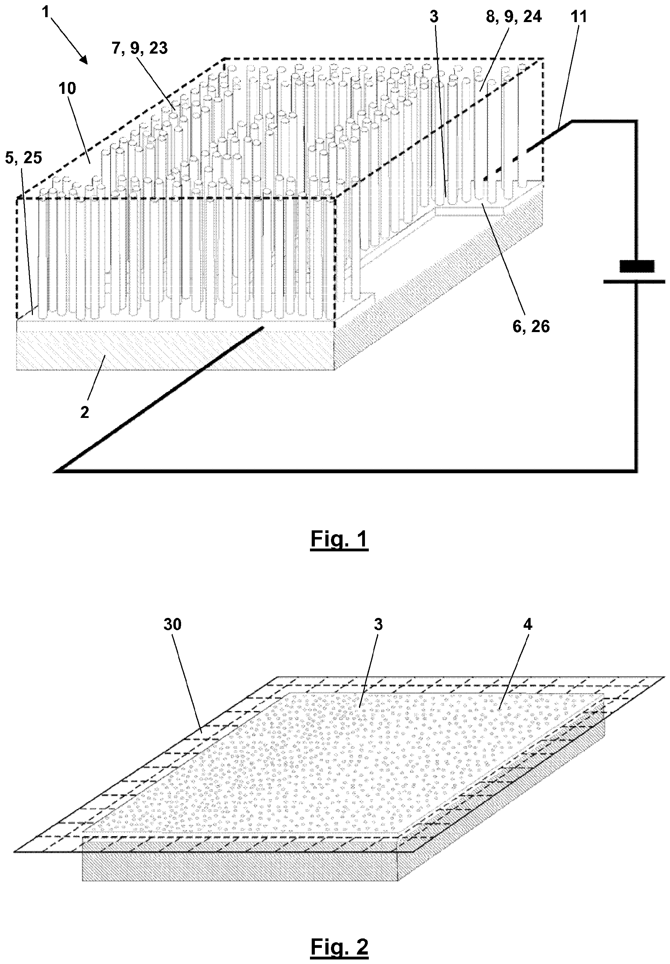

**Fig. 1** zeigt eine Speichervorrichtung 1, die nach dem erfindungsgemäßen Verfahren hergestellt wurde. Die Speichervorrichtung 1 weist ein Substrat 2 auf, auf dem eine Elektrode 25 und eine Gegenelektrode 26 angeordnet sind. Die Elektrode 25 umfasst eine Elektrodenbasis 5 und eine oberflächenvergrößernde Struktur 23 mit Oberflächenstrukturelementen 7 in Form von Kohlenstoffnanoröhren 9. Die Gegenelektrode 26 umfasst eine Gegenelektrodenbasis 6 und eine oberflächenvergrößernde Struktur 24 mit Oberflächenstrukturelementen 8 in Form von Kohlenstoffnanoröhren 9. Ein Elektrolyt 10 ist auf die Elektrode 25, die Gegenelektrode 26 und freigelegte Bereiche des Substrats 2 aufgebracht. Die Elektrode 25 und die Gegenelektrode 26 sind mit einer elektrischen Kontaktierung 11 versehen.

Zur Vereinfachung der Darstellung ist hier und in den folgenden Figuren nur eine sehr kleine Speichervorrichtung 1 gezeigt, die auch als ein Ausschnitt einer größeren Speichervorrichtung 1 betrachtet werden kann. Die gezeigte Speichervorrichtung 1 hat reale Abmessungen in ihrer Haupterstreckungsebene im Bereich weniger bis einiger hundert Nanometer. Die erfindungsgemäße Speichervorrichtung 1 kann sehr viel größer sein und hat normalerweise makroskopische Abmessungen. In der Höhe bilden die Figuren die Speichervorrichtung 1 jedoch vollständig ab. Die Höhe der erfindungsgemäßen Speichervorrichtung 1 wird wesentlich durch die oberflächenvergrößernden Strukturen 23, 24 oder Oberflächenstrukturelemente 7, 8 der Elektrode 25 und der Gegenelektrode 26 bestimmt. Werden wie im gezeigten Fall die oberflächenvergrößernden Strukturen 23, 24 oder Oberflächenstrukturelemente 7, 8 durch Kohlenstoffnanoröhren 9 gebildet, so liegt die Höhe der Speichervorrichtung 1 auch im Bereich einer typischen Länge einer Kohlenstoffnanoröhre 9 (plus gegebenenfalls einer Dicke des Substrats 2).

**Fig. 2** illustriert einen ersten Herstellungsschritt zur Herstellung der erfindungsgemäßen elektrochemischen Speichervorrichtung 1 ausgehend von dem Substrat 2. Das Substrat 2 ist nicht elektrisch leitend und kann beispielsweise eine Keramik, ein Polymer oder jedes andere geeignete Material umfassen. Auf das Substrat 2 ist eine Anschlussschicht 3 aufgetragen, in die Katalysatorpartikel 4 eingebettet sind. Die Anschlussschicht 3 definiert eine Anschlussebene 30. Die Katalysatorpartikel 4 ermöglichen oder vereinfachen, dass in einem nachfolgenden Herstellungsschritt Kohlenstoffnanoröhren 9 auf die Anschlussschicht 3 aufwachsen. Die Anschlussschicht 3 ist leitfähig und kann beispielsweise aus Graphit, einem Metall oder einem leitfähigen Polymer wie Polypyrrol, Polyanilin, Pentacen oder Polythiopen gebildet sein. Sie kann in beliebiger geeigneter Weise auf das Substrat 2 aufgetragen werden, beispielsweise über eine Gasphase oder eine flüssige Phase.

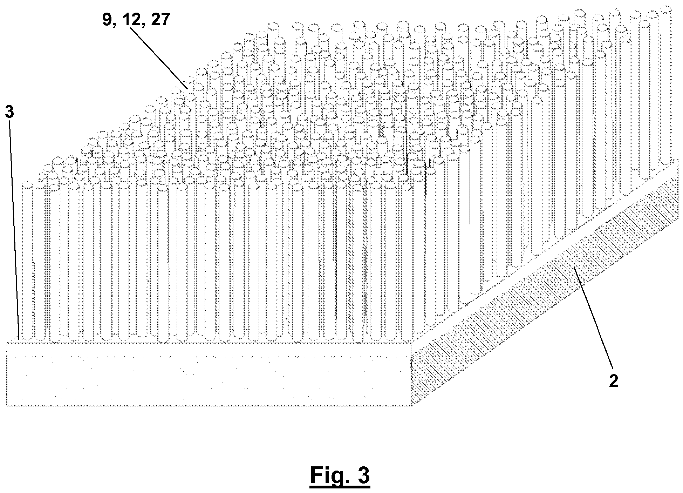

**Fig. 3** zeigt einen zweiten Herstellungsschritt zur Herstellung der erfindungsgemäßen Speichervorrichtung. Hierbei sind Kohlenstoffnanoröhren 9 als Oberflächenstrukturelemente 12 zur Bildung einer oberflächenvergrößernden Struktur 27 auf der Anschlussschicht 3 aufgewachsen, ohne dass die Anschlussschicht 3 bereits in Elektrodenbasis 5 und Gegenelektrodenbasis 6 aufgetrennt wurde. Die Anschlussschicht 3 hängt also noch zusammen und es ist nicht zu unterscheiden, welche der Oberflächenstrukturelemente 12 später der Elektrode 25 und welche der Gegenelektrode 26 zugeordnet werden. Bei dem Auftrennen der Anschlussschicht 3 in die Elektrodenbasis 5 und die Gegenelektrodenbasis wird die oberflächenvergrößernde Struktur 27 in die oberflächenvergrößernde Struktur 23 der Elektrode 25 und die oberflächenvergrößernde Struktur 24 der Gegenelektrode 26 aufgetrennt. In demselben Schritt werden die Oberflächenstrukturelemente 12 in die Oberflächenstrukturelemente 7 der Elektrode 25 und die Oberflächenstrukturelemente 8 der Gegenelektrode 26 aufgetrennt. Die Elektrodenbasis 5 und die Gegenelektrodenbasis 6 werden erzeugt, indem die Anschlussschicht 3 bereichsweise abgetragen wird, beispielsweise mit einem Laser, einem fokussierten lonenstrahl oder einer Plasmaätztechnik. Die verbleibenden Teile der Anschlussschicht 3 bilden die Elektrodenbasis 5 und die Gegenelektrodenbasis 6. Hierbei werden auch die Kohlenstoffnanoröhren 9 teilweise mit abgetragen, soweit sie sich in dem Bereich der Anschlussschicht 3 befinden, der zur Erzeugung der Elektrode 5 und der Gegenelektrode 6 abgetragen werden muss.

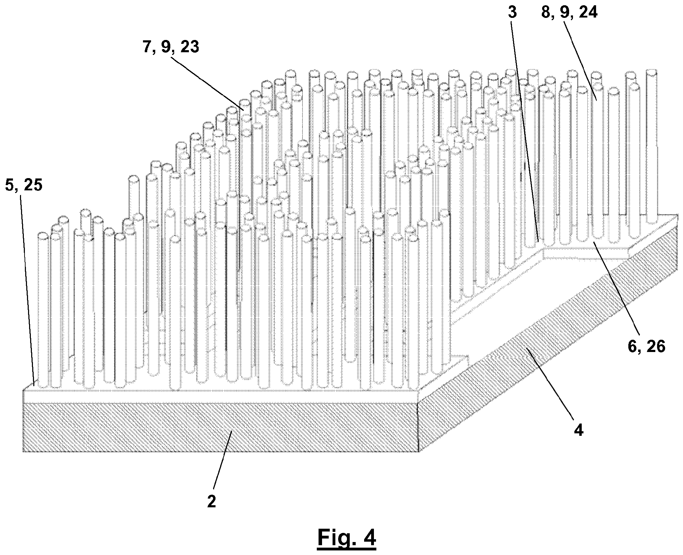

Fig. **4** zeigt eine typische Konfiguration, bei der sich ein wesentlicher Bereich der Elektrodenbasis 5 entlang einer Längskante des Substrats 2 erstreckt, während sich ein wesentlicher Bereich der Gegenelektrodenbasis 6 entlang einer gegenüberliegenden Längskante des Substrats 2 erstreckt. Zwischen der Elektrodenbasis 5 und der Gegenelektrodenbasis 6 ist ein Bereich des Substrats durch das Entfernen der Anschlussschicht 3 freigelegt worden. Dieser Bereich separiert die Elektrodenbasis 5 von der Gegenelektrodenbasis 6.

Die Elektrodenbasis 5 definiert eine Elektrodenebene 28 und die Gegenelektrodenbasis 6 definiert eine Gegenelektrodenebene 29. Fig. 4 zeigt, dass die Elektrodenebene 28 und die Gegenelektrodenebene 29 in der Anschlussebene 30 zusammenfallen. Dies ist schon dadurch bedingt, dass die Elektrodenbasis 5 und die Gegenelektrodenbasis 6 durch Auftrennen und Abtragen derselben Anschlussschicht 3 erzeugt wurden, die die Anschlussebene 30 definiert.

Fig. 4 deutet an, dass die Elektrodenbasis 5 und die Gegenelektrodenbasis 6 kammartig ineinandergreifen. Ein solches Ineinandergreifen ist für die Funktion der Speichervorrichtung nicht notwendig, erhöht aber deren Kapazität in vorteilhafter Weise. In Fig. 4 sind nur ein Eingriffselement 21 für die Elektrodenbasis 5 und zwei Eingriffselemente 22 für die Gegenelektrodenbasis 6 gezeigt. In einer typischen, makroskopischen Speichervorrichtung greifen jedoch wesentlich mehr Eingriffselemente 21, 22 ineinander ein. Die Eingriffselemente 21, 22 sind nicht notwendigerweise von der gezeigten rechteckigen Grundform, sie können auch dreieckig, halbkreisförmig, spiralförmig, mäanderförmig, rechteckig mit abgerundeten Ecken oder in anderer geeigneter Weise regelmäßig oder unregelmäßig geformt sein.

Die oberflächenvergrößernde Struktur 23, 24 erhöht die Oberfläche der Elektrode 25 und der Gegenelektrode 26 und damit die Kapazität der Speichervorrichtung. Die oberflächenvergrößernde Struktur 23, 24 kann auch in anderer Weise als durch diskrete Oberflächenstrukturelemente 7, 8 ermöglicht werden, beispielsweise durch eine kontinuierlich gewellte oberflächenvergrößernde Struktur 23, 24. Diskrete Oberflächenstrukturelemente 7, 8 können jede geeignete Form annehmen, beispielsweise können sie außer der zylindrischen Struktur von Kohlenstoffnanoröhren 9 auch eine blattförmige oder lamellenartige Struktur (wie etwa Graphen) haben oder pyramidenförmig, halbkugelförmig oder in anderer Weise regelmäßig oder unregelmäßig geformt sein. Bevorzugt sind die Oberflächenstrukturelemente 7, 8 in ihren Hauptachsen parallel zueinander und/oder quer zu der Anschlussebene 30, sie können aber auch anders angeordnet sein. Dabei ist bevorzugt, dass sich die Oberflächenstrukturelemente 7, 8 untereinander nicht berühren.

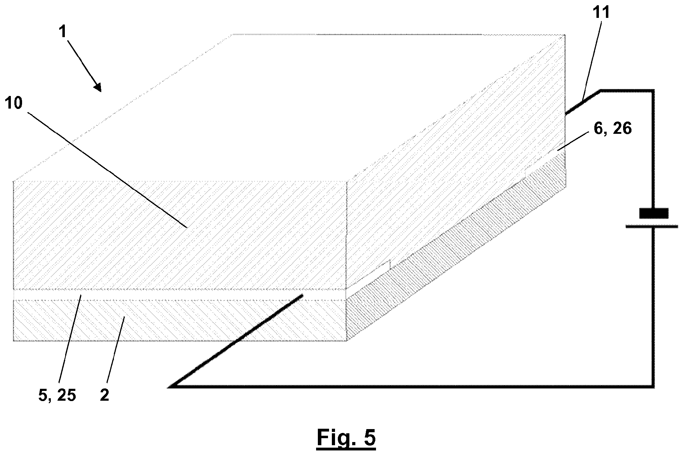

**Fig. 5** zeigt einen vierten Herstellungsschritt zur Herstellung der erfindungsgemäßen Speichervorrichtung 1 und damit die betriebsbereite Speichervorrichtung 1. Die in Fig. 5 dargestellte Speichervorrichtung 1 entspricht der in Fig. 1 dargestellten Speichervorrichtung 1. Zur Verdeutlichung ist jedoch in Fig. 5 der Elektrolyt 10 undurchsichtig dargestellt, während er in Fig. 1 durchsichtig wiedergegeben ist.

In Fig. 5 ist der Elektrolyt 10 auf die Elektrode 25, die Gegenelektrode 26 und die freigelegten Bereiche des Substrats 2 aufgebracht. Der Elektrolyt 10 kann beispielsweise durch eine chemische Gasphasenabscheidung oder eine Atomlagenabscheidung aufgebracht werden.

Der Elektrolyt bedeckt die Elektrodenbasis 5, die Gegenelektrodenbasis 6, die freigelegten Bereiche des Substrats 2 und die Oberflächenstrukturelemente 7, 8 vollständig. Im gezeigten Beispiel füllt der Elektrolyt 10 auch Zwischenräume zwischen den Oberflächenstrukturelementen 7, 8 vollständig oder nahezu vollständig aus. Es ist aber auch möglich, dass der Elektrolyt 10 die Zwischenräume nur zum Teil ausfüllt, oder lediglich die Oberfläche der Elektrode 25 und der Gegenelektrode 26 sowie des freigelegten Teils des Substrats 2 bedeckt, ohne die Zwischenräume auszufüllen. Der Elektrolyt 10 kann ein Festkörper- oder ein Flüssigelektrolyt sein.

In Fig. 5 ist außerdem gezeigt, dass die Elektrode 25 und die Gegenelektrode 26 mit der elektrischen Kontaktierung 11 versehen sind. Die elektrische Kontaktierung 11 ist notwendig, damit die Speichervorrichtung gemäß ihrer Bestimmung betrieben werden kann. Es ist möglich, dass die Elektrode 25 und die Gegenelektrode 26 erst kontaktiert werden, wenn der Elektrolyt 10 aufgebracht worden ist. Bevorzugt werden die Elektrode 25 und die Gegenelektrode 26 jedoch bereits in einem früheren Herstellungsschritt kontaktiert, besonders bevorzugt wird die Kontaktierung 11 bereits angebracht, wenn die Anschlussschicht 3 erzeugt wird, also vor Erzeugung von Elektrodenbasis 5 und Gegenelektrodenbasis 6. Die Kontaktierung 11 kann in dieser Weise beim Aufbringen der Anschlussschicht 3 in diese eingebettet werden oder zwischen dem nichtleitenden Substrat 2 und der Anschlussschicht 3 angebracht werden. Die Elektrodenbasis 5 und die Gegenelektrodenbasis 6 sind damit von Anfang an kontaktiert.

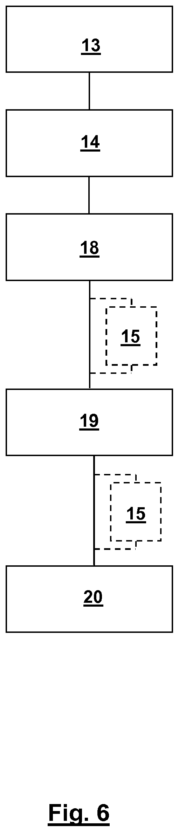

**Fig. 6** zeigt einen schematischen Ablaufplan eines Verfahrens zur Herstellung einer erfindungsgemäßen Speichervorrichtung. Dabei wird in einem Schritt 13 zunächst das Substrat 2 bereitgestellt. In einem Schritt 14 wird auf das Substrat 2 die Anschlussschicht 3 aufgebracht (vgl. Fig. 2).

In einem Schritt 18 wird die oberflächenvergrößernde Struktur 27 erzeugt (vgl. Fig. 3). Die oberflächenvergrößernde Struktur 27 oder die Oberflächenstrukturelemente 12 können nicht bereits der oberflächenvergrößernden Struktur 23 oder den Oberflächenstrukturelementen 7 einer Elektrode 25 und der oberflächenvergrößernden Struktur 24 oder den Oberflächenstrukturelemente 8 einer Gegenelektrode 26 zugeordnet werden. In einem Schritt 19 werden die Elektrodenbasis 5 und die Gegenelektrodenbasis 6 erzeugt. Beim Abtragen der Anschlussschicht 3 werden eventuell Teile der oberflächenvergrößernden Struktur 27 oder einzelne Oberflächenstrukturelemente 12 mit abgetragen.

Optional kann in einem Schritt 15 ein Übergangsmetalloxid wie beispielsweise RuO₂ zur Nutzung oder zur Verstärkung einer Pseudokapazität auf die ganze Elektrode 25 oder Teile davon und/oder die ganze Gegenelektrode 26 oder Teile davon aufgebracht werden. Ein Aufbringen des Übergangsmetalloxids kann nach dem Erzeugen der oberflächenvergrößernden Struktur 23, 24, 27 in Schritt 18 oder nach dem Erzeugen der Elektrodenbasis 5 und der Gegenelektrodenbasis 6 in Schritt 19 erfolgen. Zum Aufbringen des Übergangsmetalloxids kann jede geeignete Technik genutzt werden, beispielsweise chemische oder physikalische Gasphasenabscheidung.

Nach Ausführen der Schritte 13, 14, 18 und 19 (und ggf. 15) liegen die Elektrode 25 und die Gegenelektrode 26 vor, die die Elektrodenbasis 5 und die oberflächenvergrößernde Struktur 23 oder die Gegenelektrodenbasis 6 und die oberflächenvergrößernde Struktur 24 umfassen (vgl. Fig. 4). In einem Schritt 20 wird zwischen der Elektrode 25 und der Gegenelektrode 26 der Elektrolyt 10 angeordnet (vgl. Fig. 5). Dabei kann der Elektrolyt durch chemische Gasphasenabscheidung, Atomlagenabscheidung oder ein anderes geeignetes Verfahren aufgebracht werden. Beispielsweise kann der Elektrolyt aufgebracht werden, indem zunächst Teflon auf zu überziehende Flächen (z. B. die Elektrode 25, die Gegenelektrode 26, Teile des Substrats 2 und die Oberflächenstrukturelemente 7, 8) aufgedampft und anschließend mit Sulfonsäuregruppen funktionalisiert wird, um Nafion zu erzeugen. Der Elektrolyt überzieht mindestens überwiegende Teile der Elektrode 25 und der Gegenelektrode 26, er kann aber auch Zwischenräume zwischen der Elektrodenbasis 5, der Gegenelektrodenbasis 6 und den Oberflächenstrukturelementen 7, 8, 12 ausfüllen.

Wurde in einem der vorhergehenden Schritte bereits eine Kontaktierung 11 an der Elektrode 25 und der Gegenelektrode 26 angebracht oder wird sie spätestens im Anschluss an den Schritt 20 angebracht, so liegt nach dem Schritt 20 oder spätestens dem Anbringen der Kontaktierung 11 eine betriebsbereite Speichervorrichtung vor.

### BEZUGSZEICHENLISTE

- 1: Speichervorrichtung
- 2: Substrat
- 3: Anschlussschicht
- 4: Katalysatorpartikel
- 5: Elektrodenbasis
- 6: Gegenelektrodenbasis
- 7: Oberflächenstrukturelement
- 8: Oberflächenstrukturelement
- 9: Kohlenstoffnanoröhre
- 10: Elektrolyt
- 11: Kontaktierung
- 12: Oberflächenstrukturelement
- 13: Schritt
- 14: Schritt
- 15: Schritt
- 18: Schritt
- 19: Schritt
- 20: Schritt
- 21: Eingriffselement
- 22: Eingriffselement
- 23: Oberflächenvergrößernde Struktur
- 24: Oberflächenvergrößernde Struktur
- 25: Elektrode
- 26: Gegenelektrode
- 27: Oberflächenvergrößernde Struktur
- 28: Elektrodenebene
- 29: Gegenelektrodenebene
- 30: Anschlussebene

## Patentansprüche

1. Verfahren zur Herstellung einer elektrochemischen Speichervorrichtung (1) mit
a) Erzeugen einer Elektrodenbasis (5) für eine Elektrode (25),
b) Erzeugen einer Gegenelektrodenbasis (6) für eine Gegenelektrode (26),
c) Erzeugen einer oberflächenvergrößernden Struktur (23, 24, 27) auf der Elektrodenbasis (5) für die Elektrode (25),
d) Erzeugen einer oberflächenvergrößernden Struktur (23, 24, 27) auf der Gegenelektrodenbasis (6) für die Gegenelektrode (26) und
e) Anordnen eines Elektrolyten (10) zwischen der Elektrode (25) und der Gegenelektrode (26),
wobei
f) die Elektrodenbasis (5) und die Gegenelektrodenbasis (6) in einer gemeinsamen Anschlussebene (30) erzeugt werden, indem
fa) eine leitfähige Anschlussschicht (3) auf ein nicht leitfähiges Substrat (2) aufgebracht wird und
fb) die leitfähige Anschlussschicht (3) bereichsweise entfernt wird, um aus einem Flächenbereich der Anschlussschicht (3) die Elektrodenbasis (5) und aus einem anderen Flächenbereich der Anschlussschicht (3) die Gegenelektrodenbasis (6) zu bilden,
**dadurch gekennzeichnet, dass**
g) oberflächenvergrößernde Struktur (23, 24, 27) der Elektrode (25) und der Gegenelektrode (26) erzeugt wird, bevor die Elektrodenbasis (5) oder die Gegenelektrodenbasis (6) erzeugt werden.

2. Verfahren nach Anspruch 1, **dadurch gekennzeichnet, dass** die Anschlussschicht (3) mit einem Laserstrahl oder einem fokussierten lonenstrahl oder durch eine Plasmaätztechnik bereichsweise entfernt wird.

3. Verfahren nach Anspruch 1 oder 2, **dadurch gekennzeichnet, dass** in die Anschlussschicht (3) Katalysatorpartikel (4) für ein Aufwachsen von Kohlenstoffnanoröhren (9) eingebettet werden.

4. Verfahren nach einem der vorhergehenden Ansprüche, **dadurch gekennzeichnet, dass** die oberflächenvergrößernde Struktur (23, 24, 27) der Elektrode (25) und der Gegenelektrode (26) durch ein Aufwachsen von Kohlenstoffnanoröhren (9) auf der Elektrodenbasis (5) und der Gegenelektrodenbasis (6) erzeugt werden.

5. Verfahren nach Anspruch 4, **dadurch gekennzeichnet, dass** die Kohlenstoffnanoröhren (9) unter Einfluss eines elektrischen Felds aufwachsen.

6. Verfahren nach Anspruch 4 oder 5, **dadurch gekennzeichnet, dass** die Kohlenstoffnanoröhren (9) durch plasmaunterstützte chemische Gasphasenabscheidung aufwachsen.

7. Verfahren nach einem der vorhergehenden Ansprüche, **dadurch gekennzeichnet, dass** der Elektrolyt (10) durch chemische Gasphasenabscheidung oder Atomlagenabscheidung auf die Elektrode (25) und die Gegenelektrode (26) aufgetragen wird.

8. Verfahren nach einem der vorhergehenden Ansprüche, **dadurch gekennzeichnet, dass** ein Übergangsmetalloxid auf die Elektrode (25) und/oder die Gegenelektrode (26) aufgetragen wird.

9. Verfahren nach Anspruch 8, **dadurch gekennzeichnet, dass** das Übergangsmetalloxid durch chemische oder physikalische Gasphasenabscheidung aufgetragen wird.

10. Verfahren nach einem der vorhergehenden Ansprüche, **dadurch gekennzeichnet, dass** die oberflächenvergrößernde Struktur (23, 24, 27) in einen mit dem einen Flächenbereich und einen anderen mit dem anderen Flächenbereich verbundenen Teil aufgetrennt wird, wenn die leitfähige Anschlussschicht bereichsweise entfernt wird.

11. Verfahren nach einem der vorhergehenden Ansprüche, **dadurch gekennzeichnet, dass** zur Herstellung der Speichervorrichtung (1) mehrere Lagen jeweils mit einer Elektrode (25) und einer Gegenelektrode (26), einem Elektrolyten (10) und einem Substrat (2) nach einem der Ansprüche 18-29 hergestellt und aneinander angrenzend angeordnet werden, wobei das Substrat (2) jeder Lage diese elektrisch von einer benachbarten Lage trennt.

12. Verfahren nach Anspruch 11, **dadurch gekennzeichnet, dass** die mehreren Lagen aufeinander gestapelt werden.

13. Verfahren nach einem der Ansprüche 1 bis 11, **dadurch gekennzeichnet, dass** die Speichereinrichtung zylindrisch aufgerollt wird.

## Claims

1. Method of manufacturing an electrochemical storage device (1) comprising
a) producing an electrode basis (5) for an electrode (25),
b) producing a counter electrode basis (6) for a counter electrode (26),
c) producing a surface-enlarging structure (23, 24, 27) on the electrode basis (5) for the electrode (25),
d) producing a surface-enlarging structure (23, 24, 27) on the counter electrode basis (6) for the counter electrode (26) and
e) arranging an electrolyte (10) between the electrode (25) and the counter electrode (26),
wherein
f) the electrode basis (5) and the counter electrode basis (6) are produced in a common contact plane (30) by
fa) applying a conductive contact layer (3) to a non-conductive substrate (2) and
fb) partially removing the conductive contact layer (3) in order to form the electrode basis (5) of one partial area of the contact layer (3) and the counter electrode basis (6) of another partial area of the contact layer (3),
**characterised in that**
g) the surface-enlarging structure (23, 24, 27) of the electrode (25) and the counter electrode (26) is produced before the electrode basis (5) or the counter electrode basis (6) are produced.

2. Method according to claim 1, **characterised in that** the contact layer (3) is partially removed with a laser beam or a focused ion beam or by a plasma-etching technique.

3. Method according to claim 1 or 2, **characterised in that** catalyst particles (4) for growing carbon nanotubes (9) are embedded into the contact layer (3).

4. Method according to one of the preceding claims, **characterised in that** the surface-enlarging structure (23, 24, 27) of the electrode (25) and the counter electrode (26) are produced by growing carbon nanotubes (9) on the electrode basis (5) and the counter electrode basis (6).

5. Method according to claim 4, **characterised in that** the carbon nanotubes (9) grow under the influence of an electrical field.

6. Method according to claim 4 or 5, **characterised in that** the carbon nanotubes (9) grow by plasma-enhanced chemical vapour deposition.

7. Method according to one of the preceding claims, **characterised in that** the electrolyte (10) is applied to the electrode (25) and the counter electrode (26) by chemical vapour deposition or atomic layer deposition.

8. Method according to one of the preceding claims, **characterised in that** a transition metal oxide is applied to the electrode (25) and/or the counter electrode (26).

9. Method according to claim 8, **characterised in that** the transition metal oxide is applied by chemical or physical vapour deposition.

10. Method according to one of the preceding claims, **characterised in that** the surface-enlarging structure (23, 24, 27) is separated into a part connected to the one partial area and another part connected to the other partial area when the conductive contact layer is partially removed.

11. Method according to one of the preceding claims, **characterised in that**, in order to manufacture the storage device (1), multiple layers each comprising an electrode (25) and a counter electrode (26), an electrolyte (10) and a substrate (2) are manufactured according to one of claims 18-29 and arranged adjoining each other, wherein the substrate (2) of each layer electrically separates this layer from a neighbouring layer.

12. Method according to claim 11, **characterised in that** the multiple layers are stacked.

13. Method according to one of claims 1 to 11, **characterised in that** the storage device is cylindrically rolled up.

## Revendications

1. Procédé de fabrication d'un dispositif de stockage électrochimique (1) avec
a) la production d'une base d'électrode (5) pour une électrode (25),
b) production d'une base de contre-électrode (6) pour une contre-électrode (26),
c) production d'une structure augmentant la superficie (23, 24, 27) sur la base d'électrode (5) pour l'électrode (25),
d) production d'une structure augmentant la superficie (23, 24, 27) sur la base de contre-électrode (6) pour la contre-électrode (26) et
e) disposition d'un électrolyte (10) entre l'électrode (25) et la contre-électrode (26),
f) la base d'électrode (5) et la base de contre-électrode (6) étant produites dans un plan de connexion commun (30),
fa) en appliquant une couche de connexion conductrice (3) sur un substrat non conducteur (2) et
fb) en éliminant, à certains endroits, la couche de connexion conductrice (3) afin de former, à partir d'une zone de la surface de la couche de connexion (3), la base d'électrode (5) et, à partir d'une autre zone de la surface de la couche de connexion (3), la base de contre-électrode (6),
**caractérisé en ce que**
g) la structure augmentant la superficie (23, 24, 27) de l'électrode (25) et de la contre-électrode (26) est produite avant que la base d'électrode (5) et la base de contre-électrode (6) ne soient produites.

2. Procédé selon la revendication 1, **caractérisé en ce que** la couche de connexion (3) est éliminée, à certains endroits, avec un rayon laser ou un rayon ionique focalisé ou à l'aide d'une technique de gravure par plasma.

3. Procédé selon la revendication 1 ou 2, **caractérisé en ce que** des particules de catalyseur (4) sont intégrées dans la couche de connexion (3) pour la croissance de nanotubes de carbone (9).

4. Procédé selon l'une des revendications précédentes, **caractérisé en ce que** la structure augmentant la superficie (23, 24, 27) de l'électrode (25) et de la contre-électrode (26) est produite par une croissance de nanotubes de carbone (9) sur la base d'électrode (5) et la base de contre-électrode (6).

5. Procédé selon la revendication 4, **caractérisé en ce que** les nanotubes de carbone (9) croissent sous l'effet d'un champ électrique.

6. Procédé selon la revendication 4 ou 5, **caractérisé en ce que** les nanotubes de carbone (9) croissent grâce à un dépôt chimique en phase vapeur assisté par plasma.

7. Procédé selon l'une des revendications précédentes, **caractérisé en ce que** l'électrolyte (10) est appliqué par dépôt chimique en phase vapeur ou dépôt de couches atomiques sur l'électrode (25) et la contre-électrode (26).

8. Procédé selon l'une des revendications précédentes, **caractérisé en ce qu'**un oxyde de métal de transition est appliqué sur l'électrode (25) et/ou la contre-électrode (26).

9. Procédé selon la revendication 8, **caractérisé en ce que** l'oxyde de métal de transition est appliqué par un dépôt chimique ou physique en phase vapeur.

10. Procédé selon l'une des revendications précédentes, **caractérisé en ce que** la structure augmentant la superficie (23, 24, 27) est séparée en une partie reliée avec une zone de surface et en une autre partie reliée avec l'autre zone de surface lorsque la couche de connexion conductrice est éliminée à certains endroits.

11. Procédé selon l'une des revendications précédentes, **caractérisé en ce que**, pour la fabrication du dispositif de stockage (1), plusieurs couches, chacune avec une électrode (25) et une contre-électrode (26), un électrolyte (10) et un substrat (2) sont réalisées selon l'une des revendications 18 à 29 et disposées de manière adjacente entre elles, le substrat (2) de chaque couche séparant électriquement celles-ci d'une couche adjacente.

12. Procédé selon la revendication 11, **caractérisé en ce que** les plusieurs couches sont empilées les unes sur les autres.

13. Procédé selon l'une des revendications 1 à 11, **caractérisé en ce que** le dispositif de stockage est enroulé sous une forme cylindrique.
